# EUROPÄISCHE PATENTSCHRIFT

(11) **EP 2 557 331 B1**
(45) Veröffentlichungstag und Bekanntmachung des Hinweises auf die Patenterteilung: **30.04.2014**
(21) Anmeldenummer: 12179992.8
(22) Anmeldetag: 10.08.2012
(51) Int. Cl.: F16D 55/226, F16D 65/18, F16D 65/56

(54) **Scheibenbremse für ein Nutzfahrzeug**
Disc brake for a commercial vehicle
Frein à disque pour un véhicule utilitaire

(30) Priorität: 12.08.2011 DE 102011110055
(43) Veröffentlichungstag der Anmeldung: 13.02.2013
(73) Patentinhaber: KNORR-BREMSE Systeme für Nutzfahrzeuge GmbH, 80809 München (DE)
(72) Erfinder: Weber, Ralf, 80992 München (DE); Klingner, Matthias, 82272 Moorenweis (DE)
(74) Vertreter: Schönmann, Kurt

(56) Entgegenhaltungen:
- EP-A1- 2 307 754
- WO-A1-2004/046579
- DE-A1- 4 020 189

## Beschreibung

Die Erfindung betrifft eine Scheibenbremse für ein Nutzfahrzeug nach dem Oberbegriff des Anspruchs 1, wie z.B. aus DE-A-4020 189 bekannt.

Aus der DE 94 22 342 U1 ist eine gattungsgemäße Scheibenbremse bekannt, bei der ein Bremshebel auf eine Brücke einwirkt, in der vorzugsweise zwei Stellspindeln gelagert sind, die jeweils ein Druckstück zur Aufnahme eines Bremsbelages aufweisen, das bei einer Bremsung an eine Bremsscheibe angedrückt wird. Die beiden Stellspindeln sind mit einem Außengewinde versehen und jeweils in eine Gewindebohrung der Brücke eingeschraubt.

Mithilfe einer Nachstelleinrichtung, die einer der Stellspindeln zugeordnet ist, und einem Mitnehmer der anderen Stellspindel wird durch Verdrehen der Stellspindeln in den Gewindebohrungen bei Verschleiß des Reibbelages der Bremsbelag so weit zugestellt, dass ein Lüftspiel zwischen dem Bremsbelag und der Bremsscheibe im Wesentlichen immer konstant bleibt.

Um zu verhindern, dass durch Erschütterungen während des Fahrbetriebs die Stellspindeln ungewollt ihre Lage und damit den Abstand zwischen dem Bremsbelag und der Scheibenbremse, also das Lüftspiel, verändern, werden Sicherungselemente eingesetzt, die drehhemmend auf die Stellspindeln einwirken, so dass die genannte unbeabsichtigte Verstellung verhindert wird.

Dabei liegen die Sicherungselemente reibend an der Stellspindel oder Teilen davon an. Die Reibkraft ist so bemessen, dass bei einem durch die Nachstelleinrichtung aufzubringenden bestimmten Drehmoment die Drehung der Stellspindeln problemlos möglich ist, wobei dieses Drehmoment größer ist als das, was sich aus den Erschütterungskräften im Fahrbetrieb ergeben kann.

Allerdings ist die Einstellung des Reibmomentes, das, um den genannten drehhemmenden Effekt zu erreichen, sehr genau einstellbar sein muss, bei den bekannten Sicherungselementen, wenn überhaupt, nur eingeschränkt möglich ist.

Ein bekanntes Sicherungselement wird aus einem Teilbereich einer Sekundärdichtung gebildet, die aus einem Kunststoff, insbesondere einem Elastomer besteht, wobei dieser Teilbereich drehhemmend in das dem Druckstück zugewandte Ende der Stellspindel eingreift.

Die herrschenden Betriebsbedingungen, insbesondere die bei einem Bremsvorgang entstehende Bremswärme, beeinträchtigen jedoch die Funktionsfähigkeit dieses Sicherungselementes im Laufe der Betriebsdauer der Bremse. Vor allem ist durch die Veränderung der Reibwerte keine gleichbleibende Drehhemmung zu erzielen.

Zur Vermeidung dieser Nachteile ist schon vorgeschlagen worden, die Sicherungselemente aus metallischen Ringen oder Zungen zu bilden, die in Eingriff mit den Stellspindeln stehen. Jedoch sind diese Konstruktionen nur unter einer besonderen mechanischen Bearbeitung der Brücke realisierbar, was naturgemäß zu einer Erhöhung der Fertigungskosten führt.

In der DE 87 18 084 U1 ist eine Scheibenbremse geoffenbart, bei der die Stellspindeln über einen Zugmitteltrieb synchron verstellt werden, dessen Zugmittel, ein Zahnriemen, bei Betätigung des Bremshebels durch eine in eine seitliche Verzahnung des Zahnriemens eingreifende Blattfeder bewegt wird.

Der Erfindung liegt die Aufgabe zugrunde, eine Scheibenbremse der gattungsgemäßen Art so weiterzuentwickeln, dass eine hohe Standzeit der eingesetzten Sicherungselemente erreicht und eine genaue und über die Betriebsdauer konstante Festlegung der Drehhemmung möglich ist.

Diese Aufgabe wird durch eine Scheibenbremse mit den Merkmalen des Anspruchs 1 gelöst.

Im Gegensatz zum Stand der Technik, bei dem das Sicherungselement ausschließlich im Sinne einer Reibbremse wirksam ist, wird die Drehhemmung gemäß der Erfindung durch einen definierten Formschluss erreicht, der nach Erreichen bzw. Überschreiten eines vorbestimmten Drehmoments aufgehoben wird, so dass die Stellspindel dann entsprechend verdrehbar ist.

Bevorzugt besteht die Ratschenzunge aus einer Blattfeder, deren Dimensionierung entsprechend der geforderten Drehhemmung exakt bestimmt werden kann. Damit ist gewährleistet, dass unabhängig von den Betriebsbedingungen und, besonders erwähnenswert, dauerhaft eine gleichbleibende Sicherung der Stellspindel erreicht wird.

Eine besonders genaue Einstellung der Hemmwirkung wird durch eine sehr kleine Teilung der Verzahnung des Ratschenrades erreicht, die im Übrigen mit geringen Fertigungskosten herstellbar ist, wobei das Ratschenrad an der Stellspindel verdrehfest gehalten ist.

Bevorzugt ist das Ratschenrad auf der dem Bremsbelag zugewandten Seite der Stellspindel angeordnet und zwar, wie erwähnt, verdrehfest, jedoch axial verschiebbar daran befestigt.

Die Ratschenzunge kann unmittelbar an der Brücke angeordnet sein. Denkbar ist jedoch auch, sie als integralen Bestandteil eines Zugmittelspanners vorzusehen, mit dem Trume eines Zugmittels einer Synchronisiereinrichtung spannbar sind. Mit dieser Synchronisiereinrichtung, die dann ebenfalls an der dem Bremsbelag zugewandten Seite der Nachstelleinrichtung angeordnet ist, erfolgt eine synchrone Verstellung zweier Stellspindeln, die parallel und abständig zueinander angeordnet sind.

Prinzipiell erlaubt das neue Sicherungselement eine wesentlich einfachere Ausführung der Nachstelleinrichtung, da auf den Einsatz einer Reibbremse vollständig verzichtet werden kann und die Ratschenzunge einstückig als Blechformteil mit dem erwähnten Spanner ausgebildet sein kann.

Eine einfache und kostengünstige Herstellung wird auch erreicht, wenn das Ratschenrad in ein Treibrad integriert ist, das Bestandteil eines Zugmitteltriebs der Synchronisiereinrichtung ist, über das das Zugmittel, beispielsweise in Form eines Zahnriemens oder einer Gliederkette geführt ist. Da die beteiligten Bauteile des Sicherungselementes bevorzugt aus Metall bestehen, ergibt sich eine prinzipiell über die gesamte Betriebsdauer der Scheibenbremse sich erstreckende Standzeit, überdies ohne betriebsbedingte, beispielsweise temperaturbedingte Einschränkungen der Funktionsfähigkeit.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

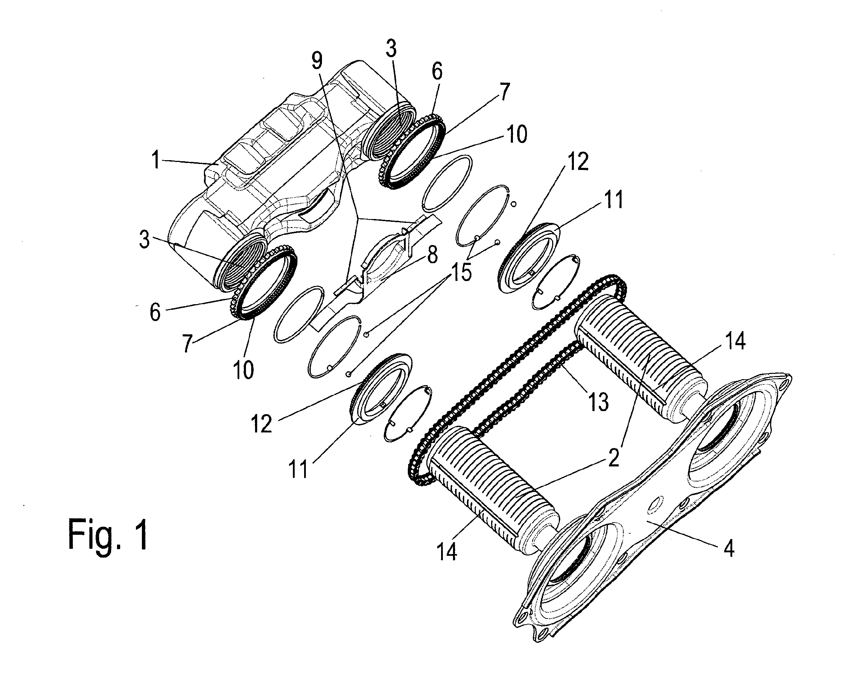

- Figur 1: einen Teil einer erfindungsgemäßen Scheibenbremse in einer Explosionsdarstellung
- Figur 2: den Teil nach Figur 1 in einer teilweise geschnittenen Draufsicht
- Figur 3: eine Vorderansicht des Teiles, gesehen in Richtung des Pfeiles III in Figur 2.

In den Figuren ist als ein Teil einer Zuspanneinrichtung einer Scheibenbremse für ein Nutzfahrzeug eine Brücke 1 dargestellt, die in Funktion in einem Bremssattel der Scheibenbremse positioniert ist und mit der Bremsbeläge an eine Bremsscheibe pressbar sind.

Hierzu sind zwei parallel und abständig zueinander angeordnete Stellspindeln 2 in der Brücke 1 gehalten, wobei an den der Brücke 1 abgewandten Enden der Stellspindeln 2 Druckstücke gelagert sind, über die bei einer Verschiebung der Zuspanneinrichtung die Bremsbeläge an die Bremsscheibe gepresst werden.

Über eine im Bremssattel positionierte Nachstelleinrichtung ist eine axiale Verstellung der Stellspindeln 2 zum Ausgleich einer verschleißbedingten Änderung eines Lüftspiels zwischen dem Bremsbelag und der Bremsscheibe möglich.

Hierzu sind die Stellspindeln 2 und zugeordnete Bohrungen 3 der Brücke 1 mit ineinander greifenden Gewinden versehen, so dass bei Betätigung der Nachstelleinrichtung durch Verdrehen der Stellspindeln 2 diese axial in Richtung des Bremsbelages bewegt werden.

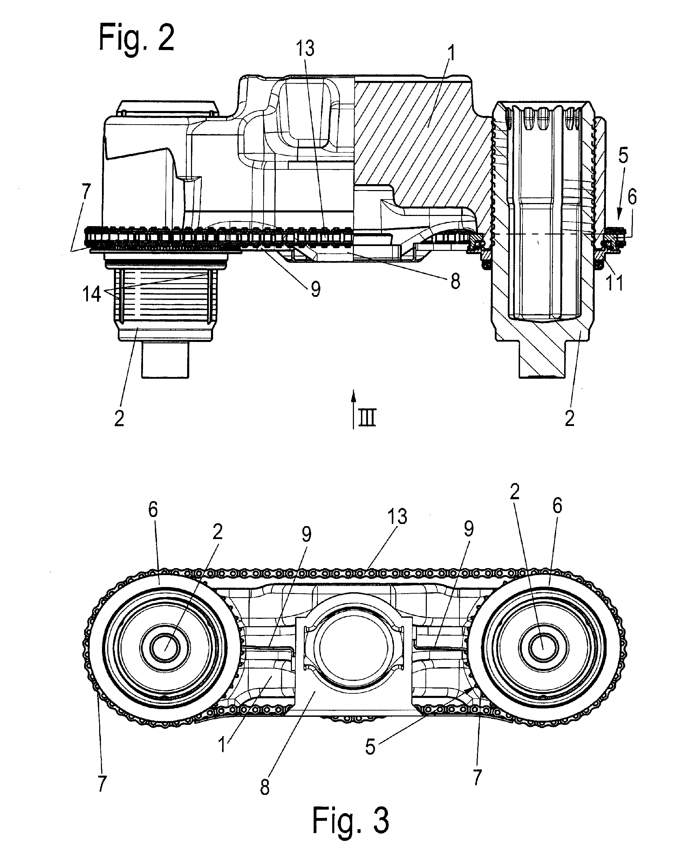

Um eine gleichmäßige Verstellung beider Stellspindeln 2 zu gewährleisten, ist eine Synchronisiereinrichtung vorgesehen, mit einem Zugmitteltrieb, bestehend aus zwei Treibrädern 5 (Figur 2) und einem Zugmittel 13, wobei an jeder Stellspindel 2 ein Treibrad 5 verdrehsicher und an einer Lagerstelle der Brücke 1 axial gesichert, jedoch verdrehbar gehalten ist.

Die Treibräder 5 sind auf der dem Bremsbelag zugewandten Seite der Brücke 1 angeordnet, wobei eine Verschlussplatte 4 das Innere des Bremssattels im Durchtrittsbereich der Stellspindeln 2 verschließt.

Die Stellspindeln 2 weisen außenseitig Axialnuten 14 auf, in denen jeweils ein Formschlusselement in Form einer Kugel 15 des zugeordneten Treibrades 5 einliegt. Dabei ist die Kugel 15 frei drehbar, sowohl im Treibrad 5 wie auch in der Axialnut 14 gehalten.

Das Treibrad 5 ist zweiteilig ausgebildet und besteht aus einem Innenrad 11, in dem die Kugeln 15 gehalten sind, sowie einem Außenrad 6, in das das Zugmittel 13, hier eine Gliederkette, formschlüssig eingreift.

Das Innenrad 11 weist an einem axialen Ansatz eine Außenverzahnung 12 auf, die in eine Innenverzahnung 10 des Außenrades 6 eingreift, so dass bei einer Vormontage der Synchronisiereinrichtung eine sehr genaue Einstellung der Stellspindeln 2 zueinander möglich ist.

Jeder Stellspindel 2 ist ein Sicherungselement zugeordnet, das bis zu einem vorbestimmten Drehmoment bremsend auf die Stellspindel 2 einwirkt.

Erfindungsgemäß ist das Sicherungselement im Sinne einer Ratsche ausgebildet, mit einem verdrehfest mit der Stellspindel 2 verbundenen Ratschenrad 7 und einer diesem gegenüber fest stehenden und daran angreifenden federnden Ratschenzunge 9.

Diese Ratschenzungen 9 sind Bestandteil eines mittig an der Brücke 1 befestigten Spanners 8, der, wie insbesondere die Figur 3 sehr deutlich wiedergibt, am unteren Trum des Zugmittels 13 anliegt und dies unter Spannung hält.

Die Ratschenzungen 9 greifen in Ratschenzähne des Ratschenrades 7 ein, das jeweils an einem axial sich erstreckenden Bündchen des Außenrades 6 angeformt ist.

Die im Beispiel im Sinne einer Blattfeder ausgebildeten Ratschenzungen 9 können, je nach vorhandenem Bauraum, auch in anderer Federform vorliegen, beispielsweise als gewendelte Drahtfeder oder dergleichen.

### Bezugszeichenliste

- 1: Brücke
- 2: Stellspindel
- 3: Bohrung
- 4: Verschlussplatte
- 5: Treibrad
- 6: Außenrad
- 7: Ratschenrad
- 8: Spanner
- 9: Ratschenzunge
- 10: Innenzähne
- 11: Innenrad
- 12: Außenzähne
- 13: Zugmittel
- 14: Axialnut
- 15: Kugel

## Patentansprüche

1. Scheibenbremse für ein Nutzfahrzeug mit
a) einem eine Bremsscheibe übergreifenden Bremssattel,
b) einer im Bremssattel angeordneten Zuspanneinrichtung zum Andrücken von Bremsbelägen an die Bremsscheibe,
c) mindestens einer Stellspindel (2), die in einer Brücke (1) an der die Zuspanneinrichtung angreift, mittels eines Korrespondenzgewindes verdrehbar gelagert ist,
d) einer im Bremssattel positionierten Nachstelleinrichtung, mit der über eine axiale Verstellung der Stellspindel (2) eine verschleißbedingte Änderung eines Lüftspiels zwischen dem Bremsbelag und der Bremsscheibe im Wesentlichen ausgleichbar ist, sowie
e) einem bis zu einem vorbestimmten Drehmoment bremsend auf die Stellspindel (2) wirkendes Sicherungselement,
**dadurch gekennzeichnet, dass**
f) das Sicherungselement im Sinne einer Ratsche ausgebildet ist, mit einem verdrehfest mit der Stellspindel (2) verbundenen Ratschenrad (7) und einer diesem gegenüber fest stehenden und daran angreifenden federnden Ratschenzunge (9).

2. Scheibenbremse nach Anspruch 1, **dadurch gekennzeichnet, dass** die Ratschenzunge als Blattfeder ausgebildet ist.

3. Scheibenbremse nach Anspruch 1 oder 2, **dadurch gekennzeichnet, dass** das Ratschenrad (7) integraler Bestandteil eines Treibrades (5) ist, das verdrehfest, jedoch axial verschiebbar auf der zugeordneten Stellspindel gelagert ist.

4. Scheibenbremse nach Anspruch 3, **dadurch gekennzeichnet, dass** das Treibrad (5) Bestandteil eines Zugmitteltriebs einer Synchronisiereinrichtung ist, mit der eine Synchronisierung bei der Verstellung zweier Stellspindeln (2) erfolgt.

5. Scheibenbremse nach einem der vorhergehenden Ansprüche, **dadurch gekennzeichnet, dass** die Ratschenzunge (9) an einem Spanner (8) für ein Zugmittel (13) des Zugmitteltriebs angeordnet ist.

6. Scheibenbremse nach Anspruch 5, **dadurch gekennzeichnet, dass** der Spanner (8) und die angeformte Ratschenzunge (9) als Blechformteile ausgebildet sind.

7. Scheibenbremse nach einem der vorhergehenden Ansprüche, **dadurch gekennzeichnet, dass** die Ratschenzunge (9) hinsichtlich ihrer Federcharakteristik entsprechend der geforderten auf die Stellspindel (2) wirksamen Drehhemmung dimensioniert ist.

## Claims

1. Disc brake for a commercial vehicle, having
a) a brake calliper engaging over a brake disc,
b) a brake application device, arranged in the brake calliper, for pressing brake pads against the brake disc,
c) at least one adjusting spindle (2) which is rotatably mounted by means of a corresponding thread in a bridge (1), on which the brake application device engages,
d) a wear adjustment device positioned in the brake calliper, with which a wear-based adjustment of the air clearance between the brake pad and the brake disc can be substantially compensated by an axial adjustment of the adjusting spindle (2), and also
e) a securing element acting in a braking manner on the adjusting spindle (2) up to a predetermined torque,
**characterised in that**
f) the securing element is designed in the manner of a ratchet, with a ratchet wheel (7) connected in a rotationally secure manner to the adjusting spindle (2) and a resilient ratchet tongue (9), stationary relative to the ratchet wheel (7), and engaging thereon.

2. Disc brake according to claim 1, **characterised in that** the ratchet tongue is formed as a plate spring.

3. Disc brake according to claim 1 or 2, **characterised in that** the ratchet wheel (7) is an integral component of a driving wheel (5) which is mounted in a rotationally secure but axially displaceable manner on the assigned adjusting spindle.

4. Disc brake according to claim 3, **characterised in that** the driving wheel (5) is a component of a traction mechanism of a synchronisation device, with which a synchronisation is realised in the adjustment of two adjusting spindles (2).

5. Disc brake according to one of the preceding claims, **characterised in that** the ratchet tongue (9) is arranged on a tensioning element (8) for a traction means (13) of the traction mechanism.

6. Disc brake according to claim 5, **characterised in that** the tensioning element (8) and the ratchet tongue (9) moulded on are formed as sheet metal moulded parts.

7. Disc brake according to one of the preceding claims, **characterised in that** the ratchet tongue (9) is dimensioned in relation to its spring characteristic corresponding to the required rotation inhibition acting on the adjusting spindle (2).

## Revendications

1. Frein à disque pour un véhicule utilitaire, comprenant
(a) un étrier de frein (1) chevauchant un disque de frein;
(b) un moyen de serrage de frein disposé dans ledit étrier de frein pour le serrage des garnitures de frein contre ledit disque de frein,
(c) au moins une vis de réglage (2), qui est logée de façon rotative moyennant un filetage correspondant dans un pont (1), auquel s'attaque ledit moyen de serrage de frein,
(d) an moyen de rattrapage positionné dans ledit étrier de frein, moyennant duquel on peut compenser essentiellement un changement du jeu entre ladite garniture de frein et ledit disque de frein, qui est causé par l'usure, via un ajustement axial de ladite vis de réglage (2), ainsi
(e) qu'un élément de blocage, qui engendre un effet de freinage sur ladite vis de réglage (2) jusqu'à un couple prédéterminé,
**caractérisé en ce que**
(f) ledit élément de blocage est conçu en sens d'un mécanisme à cliquet ayant une roue à cliquet (7) reliée à ladite vis de réglage (2) d'une façon à empêcher une rotation, et une languette à cliquet élastique (9), qui est stationnaire relativement à ladite roue à cliquet en s'y s'attaquant.

2. Frein à disque selon la revendication 1, **caractérisé en ce que** ladite languette à cliquet est conçu sous forme d'un ressort à lame.

3. Frein à disque selon la revendication 2, **caractérisé en ce que** ladite roue à cliquet (7) constitue un composant intégral d'une roue motrice (5), qui est logée d'une manière à empêcher une rotation, mais pour un déplacement axial, sur la vis de réglage y affectée.

4. Frein à disque selon la revendication 3, **caractérisé en ce que** ladite roue motrice (5) constitue un composant d'un système de transmission en traction d'un moyen de synchronisation, avec lequel une synchronisation est réalisée quand deux vis de réglage (2) sont réglées.

5. Frein à disque selon une quelconque des revendications précédentes, **caractérisé en ce que** ladite languette à cliquet (9) est disposée à un tendeur (8) pour un moyen de traction (13) dudit système de transmission en traction.

6. Frein à disque selon la revendication 5, **caractérisé en ce que** ledit tendeur (8) et ladite languette à cliquet (9) y moulée sont conçus sous forme des pièces moulées en tôle.

7. Frein à disque selon une quelconque des revendications précédentes, **caractérisé en ce que** ladite languette à cliquet (9) est dimensionnée, en ses caractéristiques de ressort, en correspondance avec le blocage de rotation requis, qui agit sur ledit vis de réglage (2).
